# EUROPEAN PATENT APPLICATION

(11) **EP 4 060 684 A1**
(43) Date of publication of application: **21.09.2022**
(21) Application number: 22162266.5
(22) Date of filing: 15.03.2022
(51) Int. Cl.: H01B 3/12, H01B 3/42, H01B 3/46, H01B 7/29, H01B 13/14, B32B 15/20, B32B 25/20, H01B 7/02, B32B 1/08

(54) **ELECTRICAL CABLE**

(30) Priority: 16.03.2021 IT 202100006224
(71) Applicant: Finconnection S.r.l., 36054 Montebello Vicentino (VI) (IT)
(72) Inventor: CANDIO, Samuele, 36045 LONIGO (VI) (IT)
(74) Representative: Marchioro, Paolo

(57) **Abstract**

An electrical cable (1, 10) comprising at least one core (2, 20) provided with a conductor (21, 210) and an insulating layer (22, 220) of ceramized silicone rubber extruded externally to the conductor (21, 210). The electrical cable (1, 10) further comprises a coating (3, 30) made of polyetherimide-silicone copolymer (PEI-Si) extruded externally to the core (2, 20), wherein the thickness of the section of the coating (3, 30) is in a percentage comprised between 25% and 35% with respect to the thickness provided by the sum of the sections of the insulating layer (21, 210) and of the coating (3, 30) itself.

## Description

The present invention relates to the field of electrical cables; in particular, the present invention relates to a high temperature resistant and flexible electrical cable.

It is well known that electrical cables can be distinguished on the basis of several categories.

For example, electrical cables are divided into low-voltage cables and medium-and high-voltage cables, depending on the operating voltage.

They can also be classified according to the material used as insulation and/or coating into: elastomeric insulated cables; thermoplastic insulated cables; cables with mineral insulation; impregnated paper insulated cables.

In addition, electrical cables can be divided, depending on their use, into cables for fixed installation, i.e. cables which once installed are not to be moved any more, and cables for mobile installation, which are subject to more or less frequent movement.

In addition, electrical cables can be subdivided according to the number of cores into single-core, double-core, three-core and multi-core.

Again, based on their fire behaviour, cables can be subdivided into flame retardant cables; fire retardant cables; fire resistant cables; and LS0H (Low Smoke Zero Halogen) cables.

Last but not least, electrical cables can be subdivided, depending on their use, into electrical cables designed to transmit power, cables for data transmission used for transmitting analog and digital information/signals, and signal and control cables for a control system in industrial or civil installations.

In particular, high temperature resistant electrical cables are cables configured to be able to function with acceptable electrical performance even when exposed to high temperatures for a certain period of time.

In patent CA 2800035A1, an electrical cable resistant to a temperature of at least 90°C, having fireproof properties and free from halogens is described, wherein the core consists of at least one electrical wire provided with a conductor and an insulating layer surrounding the conductor, all surrounded by a casing made of a mixture of polymers, such as polyamide.

A further type of electrical cables known in the art are silicone insulated cables. These silicone insulated electrical cables can be used for many different applications due to the cable's resistance over a wide temperature range, from -60°C to +180°C with peaks also of up to +230°C.

In order to improve thermal resistance and mechanical properties, insulators containing fluorocarbon resins and polytetrafluoroethylene derivatives (PTFE) are used.

However, these fluorocarbon resins have good thermal, mechanical and chemical resistance characteristics, but also some disadvantages.

In particular, in the event of fire, these resins release toxic compounds into the environment, such as hydrofluoric acid, which is known to be able to penetrate deep into the skin, cause severe burns, and lead to a serious imbalance of body electrolytes, as well as causing corrosion of metal components and electronic circuits present in the surrounding area.

Further, another disadvantage is the low flexibility of the cable coated with these resins, which is very rigid and therefore only suitable for static use (or so-called fixed laying).

The present invention aims to overcome all the limitations and drawbacks indicated.

In particular, the present invention addresses the technical problem of how to make an electrical cable very flexible and capable of operating with acceptable electrical performance when exposed to high temperatures, without emitting toxic compounds in the event of fire.

It is therefore an object of the present invention to realise a flexible electrical cable, which can be easily installed even at low temperatures, with particularly tight radii of curvature and, moreover, in the presence of physical stresses associated with moving applications.

Furthermore, it is an aim of the present invention for such an electrical cable to have excellent thermal resistance to high temperatures and fire, ensuring service even when directly exposed to a flame.

Furthermore, it is an aim of the present invention for such an electrical cable not to contain toxic compounds that could be released into the environment in the event of fire.

The above-mentioned purposes are achieved by the construction of an electrical cable in accordance with independent claim 1.

The aforementioned purposes are further achieved by a method for making an electrical cable according to claim 13.

Further characteristics of the cable and the method are described in the dependent claims.

The aforesaid purposes, together with the advantages that will be mentioned farther on, will be readily apparent during the description of some preferred embodiments of the invention, which are given by way of non-limiting indication with reference to the accompanying drawings, where:
- Figures 1a and 1b show, respectively, an axonometric view and a sectional view of the core of the electrical cable according to the invention;
- Figures 1c and 1d show, respectively, an axonometric view and a sectional view of the core surrounded by the electrical cable coating according to a first embodiment of the invention;
- Figures 2a and 2b show, respectively, an axonometric view and a sectional view of the electrical cable according to the first embodiment of the invention;
- Figures 3a, 3b and 3c show sectional views of the electrical cable according to three variant embodiments of the first embodiment of the invention;
- Figures 4a and 4b show, respectively, an axonometric view and a sectional view of the electrical cable according to a second embodiment of the invention;
- Figure 5 shows a sectioned view of the electrical cable according to a variant embodiment of the second embodiment of the invention.

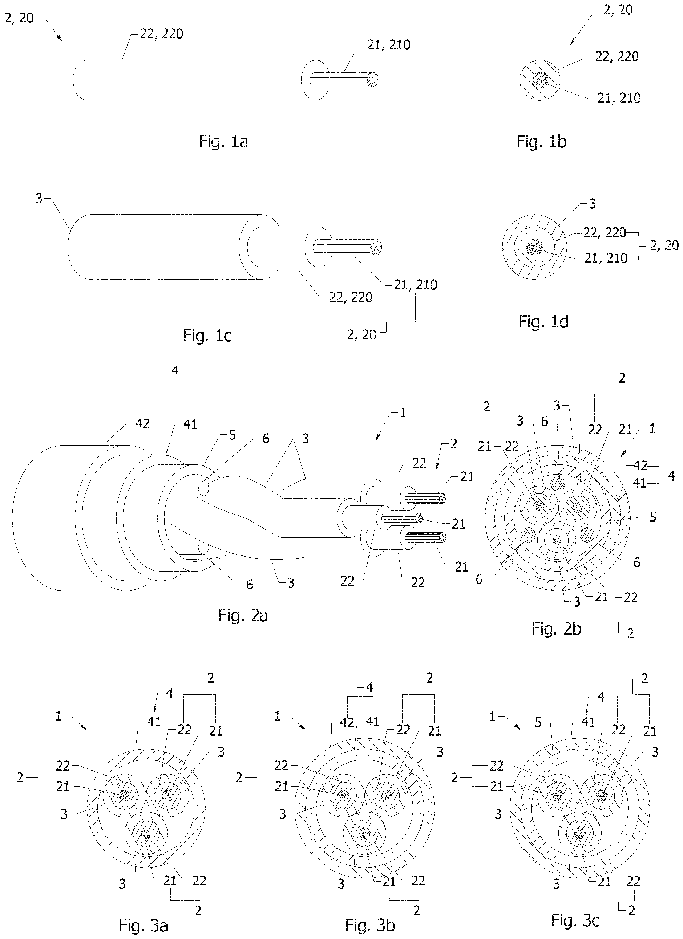

The electrical cable according to a first embodiment of the invention is shown in Figures 2a and 2b where it is collectively referred to as number 1.

The electrical cable 1 is particularly suitable for use in high-temperature situations, such as applications in industrial wiring, electric motors, transformers, alternators, generators, metal industries, shipyards and railways. The electrical cable 1 according to the first embodiment of the invention comprises at least one core 2 provided with a conductor 21 and an insulating layer 22 made of ceramized silicone rubber and extruded externally to the conductor 21, shown in Figures 1a and 1b.

The term ceramized silicone rubber is understood herein to mean a composition of a silicone rubber preferably with added ceramizing additives (also called refractory additives), such as oxides, hydroxides or metal silicates, capable of forming, at a given temperature, a coherent ceramic structure.

Optionally, the above composition may include further additives, other than ceramizing additives, such as stabilizers and flame retardant fillers.

Preferably, the insulating layer 22 is a continuous layer.

The term "continuous layer" refers to a layer in which the material is distributed substantially homogeneously around the underlying layer.

This characteristic is achieved by extruding the insulating layer 22 over the conductor 21.

As for the conductor 21, it preferably comprises a plurality of metal wires, arranged in a spiral, capable of conducting the electrical current.

It is not excluded that, according to a variant of the invention, the conductor 21 is in the form of a solid bar. This variant is particularly advantageous for fixed cable applications.

The conductor 21 may be made of any electrically conductive material known in itself, such as: annealed, bare or coated copper; aluminium or aluminium alloy.

It should be noted that the term "annealed coated copper" means a conductor 21 made of copper coated with a thin layer of a conductive metal, such as tin, nickel or silver.

An expert in the field will be able to identify the preferred material for the conductor 21 according to the operational application of the electrical cable 1. Optionally, the choice of material type may depend on the operating temperature of the electrical cable 1.

By way of non-limiting example:
- for applications up to a temperature of 150°C, conductor 21 is preferably made of red copper;
- for applications up to a temperature of 220°C, conductor 21 is preferably made of tin-plated copper;
- for applications up to a temperature of 260°C, conductor 21 is preferably made of silver-coated copper and/or nickel-coated copper;
- for applications at temperatures above 260°C, conductor 21 is preferably made of nickel.

It is also specified that the conductor 21 may be made of a single wire, commonly called a rigid conductor, or be stranded, commonly called a flexible conductor.

The conductor 21 may, for example, be a class 1, 2, 5 or 6 conductor as defined in CEI EN 60228.

Returning to the first embodiment of the invention, the electrical cable 1 further comprises a polyetherimide-silicone copolymer (PEI-Si) coating 3, extruded externally to the core 2.

PEI-Si is a polyetherimide-siloxane block copolymer.

Advantageously, the combination of an insulating layer 22 made of ceramized silicone rubber with a PEI-Si coating 3 enables the electrical cable 1 to exhibit high thermal resistance at the same time as excellent mechanical properties. The electrical cables of the prior art have a single silicone rubber coating and are only suitable for static use due to their minimal mechanical resistance to tearing.

Instead, the combination of an insulating layer 22 with the coating 3 of the present invention enables this limitation of the prior art to be overcome by making an electrical cable 1 characterized by an advantageous balance of high flexibility and hardness.

The electrical cable 1 also has high thermal stability, with a continuous use temperature of up to 155°C, and a short-term use temperature of up to 180°C. Additionally, due to the special combination of materials and their arrangement in the cable structure, the electrical cable 1 has excellent flexibility and, at the same time, very good fire and heat resistance.

Still advantageously, the materials of the electrical cable 1 are free of halogenated compounds so that, in a possible combustion, the electrical cable 1 will generate a minimum emission of corrosive toxic gases and opaque fumes, thus achieving one of the purposes of the present invention.

More specifically, the applicant, by means of experimental tests, has been able to observe that the optimal structure of the electrical cable 1 of the invention, which allows the aforementioned technical advantages to be obtained, envisages that the thickness of the section of the extruded coating 3 should be, in percentage, comprised between 25% and 35% with respect to the thickness provided by the sum of the sections of the extruded insulating layer 22 and of the coating 3 itself.

Even more preferably, in the case of an electrical cable with a single conductor 21, as shown in Figures 1c and 1d, this percentage is comprised between 25% and 28%, with a minimum thickness for the coating 3 of 0.175 mm.

However, in the case of a multi-core electrical cable of the invention (with more than one conductor 21), this percentage is comprised between 29% and 33%.

In summary, the identification of such ratios of the thicknesses between the coating 3 and the insulating layer 22 has allowed surprising results to be obtained in terms of fire resistance according to IEC 60332-3-22, in terms of safety tests according to IEC 60754-3 and in terms of fire resistance test according to IEC 60331-21, and has also allowed a low halogen content to be obtained; therefore, these ratios allow the electrical cable of the invention to be provided, at the same time, with excellent mechanical characteristics (breaking load and elongation), excellent behaviour at low and high temperatures (bending at -40°C and +150°C), and excellent flexibility and abrasion resistance values.

Even more preferably, in order to further improve the flexibility of the cable 1 of the invention and thus make the latter suitable for mobile laying, it is envisaged that said cable 1 includes between the insulating layer 22 and the coating 3 a layer of technical talc deposited on the insulating layer 22 by talc powdering, preferably talc powdering of an electrostatic type. More specifically, this technical talc is lithium stearate.

The use of electrostatic talc powdering allows for minimum homogeneous powder deposition which, together with extrusion techniques, provides flexibility without affecting the physical and functional characteristics of the cable 1.

According to the first embodiment of the invention, the coating 3 is extruded externally and at least partially in contact with the core 2, as shown in Figures 1c and 1d.

Preferably, the coating 3 is extruded externally and substantially totally in contact with the core 2.

According to the first embodiment of the invention, the electrical cable 1 comprises a plurality of such cores 2, as visible in Figures 2a and 2b.

Still according to the first embodiment of the invention, each of said cores 2 comprises a corresponding coating 3 extruded externally and at least partially in contact with the insulating layer 22 of the core 2.

As shown in Figure 2a, preferably the aforementioned cores 2 of such plurality of cores 2 are spirally wound together. These cores 2 are also joined together. It is not excluded that, according to a variant embodiment of the invention, the cores 2 of the plurality of cores 2 are arranged differently from what has been indicated above.

Again, it is not excluded that, according to a variant of the invention, the electrical cable 1 comprises a single core 2.

Returning to the first embodiment of the invention, the electrical cable 1 further comprises a sheath 4 extruded externally to the coating 3, as shown in Figure 2b.

This sheath 4 comprises at least a first layer **41** extruded in ceramized silicone rubber.

Advantageously, the sheath 4 protects the cores 2 from mechanical stresses and external influences such as rain, snow, moisture, sunlight and ultraviolet light.

Again advantageously, the sheath 4 makes the electrical cable 1 particularly resistant to oil and low moisture absorption.

According to the first embodiment of the invention, the sheath 4 further comprises a second polyetherimide-silicone copolymer (PEI-Si) layer **42** extruded externally to the first layer **41** of the sheath **4,** as shown in Figures 2a and 2b.

Also in this case, it is contemplated that the cable 1 comprises, between the first layer **41** and the second layer **42,** a layer of technical talc deposited on the first layer **41** by talc powdering, preferably electrostatic talc powdering.

It is not excluded that, according to a variant embodiment of the invention, such second layer **42** is not present.

This variant embodiment is shown as a non-limiting example in Figure 3a. Again, it is not excluded that according to a variant embodiment of the invention the sheath 4 is not present.

According to the first embodiment of the invention, the electrical cable 1 further comprises a first shielding layer 5 arranged between the sheath 4 and the coating 3, shown in Figure 2b.

This first shielding layer 5 is made of a material adapted to limit internally to the electrical cable 1 the electric field generated by the conductor 21 of the core 2 when it is live.

Advantageously, the first shielding layer 5 confines the electric field generated by the energized conductor 21, limiting its propagation into the surrounding environment and, in addition, protects the core 2 and the conductor 21 from external electromagnetic interference.

Preferably, but not necessarily, such a first shielding layer 5 is a braided shield of bare or tin-plated copper coated with a synthetic material tape.

The synthetic material tape is preferably arranged underneath the braid and above the braid to protect the shield.

Said first shielding layer 5 may be arranged externally to the assembly of the plurality of cores **2,** as shown in Figure 2b, or may be arranged around the coating 3 of each individual core 2 of the plurality of cores 2.

It is not excluded that, according to a variant embodiment of the invention, this first shielding layer 5 is made and/or arranged in a different way from what has been indicated above.

By way of non-limiting example, Figure 3c shows a variant embodiment of the electrical cable 1 in which the first shielding layer 5 is arranged between the sheath 4 and the coating 3 and in which the sheath 4 does not have the second layer 42.

It is also not excluded that according to a variant embodiment of the invention such a first shielding layer 5 is not present.

Such latter variant embodiment is shown by way of non-limiting example in Figure 3b.

Returning to the first embodiment of the invention, the electrical cable 1 further comprises one or more filling elements 6 arranged in an intermediate position between the cores 2 and the sheath **4,** as shown in Figures 2a and 2b.

The filling elements 6 are configured to at least partially fill the gaps outside the coatings 3 of the cores 2 and to give them a round shape.

Such filling elements 6 are filling elements of the type known per se, such as elements made of halogen-free polymeric material with low smoke emission.

It is not excluded that, according to a variant of the invention, the gaps outside the coatings 3 of the cores **2,** and optionally enclosed by the sheath **4,** are left empty, i.e. that such filling elements 6 are not present.

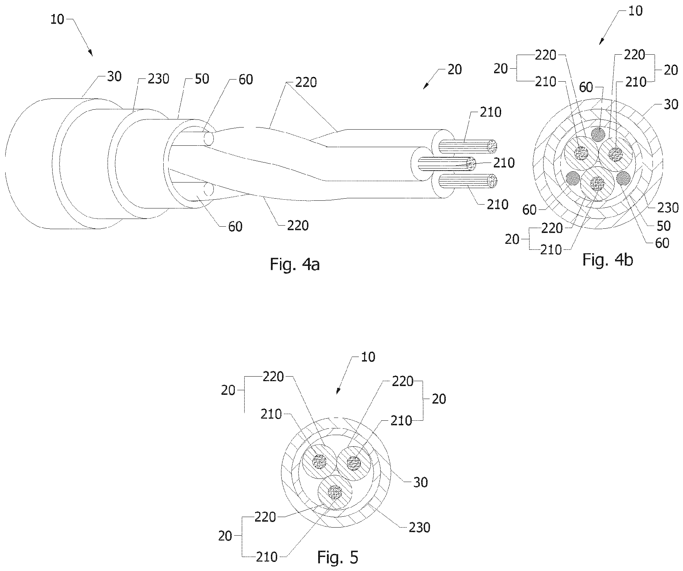

A second embodiment is also part of the present invention, which is shown by way of example in Figures 4a and 4b and in which the electrical cable of the invention is identified overall with the number 10.

The electrical cable **10** comprises at least one core **20** provided with a conductor **210** and an insulating layer **220** made of ceramized silicone rubber, extruded externally to the conductor **210,** as shown in Figures 4a and 4b.

The core **20** with the conductor **210** and the insulating layer **220** are substantially analogous in layers and materials to the core **2,** the conductor **21** and the insulating layer **22** described for the first embodiment of the invention, respectively.

The electrical cable **10** further comprises a polyetherimide-silicone copolymer (PEI-Si) coating **30** extruded externally to the core **20.**

As mentioned above, the combination of an insulating layer **220** made of ceramized silicone rubber with a PEI-Si coating **30** forms an electrical cable **10** having high flexibility and thermal resistance simultaneously with excellent mechanical properties, similarly to the electrical cable **1** according to the first embodiment of the invention.

In particular, also with regard to the second preferred embodiment of the electrical cable **10,** it is provided that the thickness of the section of the extruded coating **30** must be, in percentage, comprised between 25% and 35% with respect to the thickness provided by the sum of the sections of the extruded insulating layer **220** and of the coating **30** itself.

Even more preferably, in the case of the electrical cable with a single conductor **210,** this percentage is comprised between 25% and 28%, with a minimum thickness of the coating **30** of 0.175 mm.

In the case, instead, of a multi-core electrical cable of the invention (with more than one conductor **210),** this percentage is comprised between 29% and 33%.

Furthermore, also in this case, it is preferable for the electrical cable **10** to comprise between the insulating layer **220** and the coating **30,** a layer of technical talc deposited on the insulating layer **220** by talc powdering, preferably electrostatic talc powdering. More specifically, this technical talc is lithium stearate.

According to the second embodiment of the invention, the electrical cable **10** comprises a plurality of such cores **20,** as visible in Figures 4a and 4b.

As shown in Figure 4a, preferably the aforementioned cores **20** of such a plurality of cores **20** are spirally wound together. In particular, such cores **2** are joined together.

It is not excluded that, according to a variant embodiment, the cores **20** of the plurality of cores **20** are arranged differently from what has been indicated, or that the electrical cable **10** comprises only one core **20.**

According to the second embodiment of the invention, the electrical cable **10** further comprises an extruded covering layer **230** between the core **20** and the coating **30.**

Preferably, the above-mentioned covering layer **230** is also made of ceramized silicone rubber.

Still preferably, a layer of technical talc is deposited between the covering layer **230** and the coating **30.**

It is not excluded that, according to variant embodiments of the invention, such a covering layer **230** is not present.

Returning to the second embodiment of the invention, the electrical cable **10** comprises a second shielding layer **50** arranged between the core **20** and the covering layer **230.**

Said second shielding layer **50** is substantially similar in terms of layers and materials to the shielding layer **5** described for the first embodiment of the invention.

Such second shielding layer **50** may be arranged externally to the assembly of the plurality of cores **20,** as shown in Figure 4b, or may be arranged around the insulating layer **220** of each individual core **20** of the plurality of cores **20.**

It cannot be excluded that, according to a variant embodiment of the invention, such second shielding layer **50** is made and/or arranged in a different manner from what has been indicated above.

It is also not excluded that, according to a variant embodiment, such second shielding layer **50** is not present.

This variant embodiment is shown by way of non-limiting example in Figure 5. According to the second embodiment of the invention, the electrical cable **10** further comprises filling elements **60** arranged in an intermediate position between the cores **20** and the covering layer **230.**

The filling elements **60** are configured to at least partially fill the gaps outside the cores **2** and give the round shape to the electrical cable **10.**

The aforementioned filling elements **60** are filling elements of the type per se known in the field of electrical cables, such as elements made of halogen-free polymeric material and with low smoke emissions, and are substantially corresponding in material and structure to the filling elements **6** described for the first embodiment of the invention.

It is not excluded that, according to a variant of the invention, the gaps outside the cores **2** and optionally enclosed by the covering layer **230** are left empty, i.e. that such filling elements **60** are not present.

Optionally, the electrical cable **10** may comprise a sheath **4** extruded externally to the coating **30,** not shown in the figures.

Such a sheath **4** may comprise at least a first layer **41** of ceramized silicone rubber and, preferably but not necessarily, also a second layer **42** of polyetherimide-silicone copolymer (PEI-Si) extruded externally to the aforementioned first layer **41** of the sheath **4.**

Still optionally, the electrical cable **10** may comprise filling elements **6** arranged in an intermediate position between the cores **20** and the sheath **4,** not shown in the figures.

Further optionally, the electrical cable **10** may also comprise a first shielding layer **5** arranged between the sheath **4** and the coating **30,** not shown in the figures.

This first shielding layer **5** is made of a material adapted to limit internally to the electrical cable **10** the electric field generated by the conductor **210** of the core **20** when it is live.

A method for making an electrical cable with a conductor is also part of the present invention.

In particular, the above method is a method for making an electrical cable **1, 10** according to the first or second embodiment of the invention, including variants.

The method of the invention provides for depositing by extrusion externally to the conductor **21, 210** the insulating layer **22, 220** of ceramized silicone rubber to make said core **2, 20** and for depositing by extrusion a coating **3, 30** of polyetherimide-silicone copolymer (PEI-Si) externally to the insulating layer **22, 220** of a core **2, 20,** wherein the thickness of the section of the coating **3, 30** is in a percentage comprised between 25% and 35% with respect to the thickness provided by the sum of the sections of the insulating layer **21, 210** and the coating **3, 30.**

Preferably, but not necessarily, such extrusion operation of the coating **3, 30** comprises extruding the PEI-Si coating layer so that it is continuously wrapped around the insulating layer **22, 220.**

Preferably, the method of the invention comprises a talc powdering operation, preferably an electrostatic type talc powdering, outside the extruded insulation layer **22, 220,** for depositing a layer of technical talc, preferably a lithium stearate layer, prior to the deposition step by extrusion of the coating **3, 30.**

Still preferably but not necessarily, when the electrical cable **1, 10** to be made comprises the sheath **4,** the method of the invention also comprises depositing by extrusion the second polyetherimide-silicone copolymer (PEI-Si) layer **42** of the sheath **4** externally to the first ceramized silicone rubber layer **41** of the sheath **4.**

According to one aspect of the method of the invention, prior to carrying out the depositing operations by extrusion, the method comprises drying said materials to be extruded.

Advantageously, the method of the present invention can be implemented with one or more extruders of a type known per se, such as single-screw extruders. In particular, the extruder head, is preferably designed so that the angle coupling of the die and the wire guide is in the region of 34 degrees, resulting in semi-compression processing.

According to one aspect of the method of the invention, the rotational speed of the extrusion screw during the deposition step(s) is comprised between 40 and 80 rpm, more preferably between 50 and 70 rpm, even more preferably between 55 and 60 rpm.

It cannot be excluded that, according to variant embodiments of the method of the invention, the rotation speed of the screw may be different from that indicated.

According to a further aspect of the invention, during the extrusion deposition step(s), the melting temperature is less than or equal to 290°C, preferably less than or equal to 285°C, more preferably it is about 282°C.

Advantageously, if the melting temperature during the above-mentioned extrusion deposition step(s) is in accordance with the indicated value ranges or with the indicated values, then the PEI-Si layer will be substantially free from imperfections.

It is not excluded that, according to variant embodiments of the method of the invention, the melting temperature may be different from that indicated provided that it is such as to allow the extrusion of the polymeric compound to make the PEI-Si layer(s) substantially free from imperfections.

According to an aspect of the method of the invention, during the aforementioned extrusion deposition step(s) the working pressure is comprised between 140 and 160 Bar, preferably between 145 and 155 Bar, more preferably it is about 152 Bar.

It is not excluded that, according to variant embodiments of the method of the invention, this pressure may be different from what has been indicated. Therefore, on the basis of the foregoing, the electrical cable of the invention reaches all the prefixed aims.

In particular, the electrical cable of the invention is a flexible electrical cable suitable for use also in mobile installations as well as for static applications. Furthermore, the electrical cable of the invention is easily installed in low temperatures, with particularly tight radii of curvature and, further, in the presence of physical stresses associated with moving applications.

Again, due to the combination of materials used for the insulating layer and the coating, the electrical cable of the invention is configured to operate with acceptable electrical performance even when exposed to high temperatures and flames.

Furthermore, the electrical cable of the present invention does not contain toxic compounds, such as halogenated compounds, which could be released into the environment in the event of fire.

## Claims

1. An electrical cable (1, 10) comprising at least one core (2, 20) provided with:
- a conductor (21, 210);
- an insulating layer (22, 220) of ceramized silicone rubber extruded externally to said conductor (21, 210);
said electrical cable (1, 10) further comprising a coating (3, 30) made of polyetherimide-silicone copolymer (PEI-Si), extruded externally to said core (2, 20);
wherein the thickness of the section of said coating (3, 30) is in a percentage comprised between 25% and 35% with respect to the thickness provided by the sum of the sections of said insulating layer (21, 210) and of said coating (3, 30).

2. The electrical cable (1, 10) according to claim 1, **characterized in that** it comprises between said insulating layer (22, 220) and said coating (3, 30) a layer of technical talc deposited on said insulating layer (22, 220) by means of talc powdering, preferably talc powdering of electrostatic type.

3. The electrical cable (1, 10) according to claim 2, **characterized in that** said technical talc is lithium stearate.

4. The electrical cable (1, 10) according to any one of the preceding claims, **characterized in that** it comprises a sheath (4) extruded externally to said coating (3, 30), said sheath (4) comprising a first layer (41) of ceramized silicone rubber.

5. The electrical cable (1, 10) according to claim 4, **characterized in that** said sheath (4) further comprises a second layer (42) of polyetherimide-silicone copolymer (PEI-Si) extruded externally to said first layer (41) of said sheath (4).

6. The electrical cable (1, 10) according to claim 1, **characterized in that** it comprises between said first layer (41) and said second layer (42) a layer of technical talc deposited on said first layer (41) by means of talc powdering, preferably electrostatic talc powdering.

7. The electrical cable (1, 10) according to any one of claims 4 to 6, **characterized in that** it comprises a first shielding layer (5) arranged between said sheath (4) and said coating (3, 30), said first shielding layer (5) being made of a material suitable for limiting internally to said electrical cable (1, 10) the electric field generated by said conductor (21, 210) of said at least one core (2, 20) when it is live, said first shielding layer (5) being preferably a braided shield of bare or tin-plated copper coated with a synthetic material tape.

8. The electrical cable (1, 10) according to any one of the preceding claims, **characterized in that** it comprises a plurality of cores (2, 20) spirally wound together.

9. The electrical cable (1) according to any one of the preceding claims, **characterized in that** said coating (3) is extruded externally and in contact with said at least one core (2).

10. The electrical cable (1) according to any one of claims 8 or 9, **characterized in that** each of said cores (2) comprises a corresponding coating (3) extruded externally and in contact with said insulating layer (22) of said core.

11. The electrical cable (10) according to any one of claims 1 to 8, **characterized in that** it comprises a covering layer (230) of ceramized silicone rubber extruded between said at least one core (20) and said coating (30), a layer of technical talc being deposited between said covering layer (230) and said coating (30).

12. The electrical cable (10) according to the preceding claim, **characterized in that** it comprises a second shielding layer (50) arranged between said at least one core (20) and said covering layer (230), said second shielding layer (50) being made of a material adapted to limit internally to said electrical cable (10) the electric field generated by said conductor (210) of said at least one core (20) when it is live, said second shielding layer (50) preferably being a braided shield of bare or tin-plated copper coated with a synthetic material tape.

13. A method for making an electrical cable (1, 10) in accordance with any one of the preceding claims, **characterized in that** it involves:
- depositing by extrusion said insulating layer (22, 220) outside the conductor (21, 210) to make said at least one core (2, 20);
- depositing by extrusion a coating (3, 30) made of polyetherimide-silicone copolymer (PEI-Si) outside the insulating layer (22, 220) made of ceramized silicone rubber of at least one core (2, 20);
wherein the thickness of the section of said coating (3, 30) is in a percentage comprised between 25% and 35% with respect to the thickness provided by the sum of the sections of said insulating layer (21, 210) and of said coating (3, 30).

14. The method according to claim 13, **characterized in that** it provides for a talc powdering operation, preferably a talc powdering of the electrostatic type, externally to said extruded insulating layer (22, 220), to deposit a layer of technical talc, preferably a layer of lithium stearate, prior to the deposition step by extrusion of said coating (3, 30).

15. The method according to any one of the preceding claims, **characterized in that,** during one or both of said extrusion steps:
- the rotation speed of the extrusion screw is comprised between 40 and 80 rpm, more preferably between 50 and 70 rpm, even more preferably between 55 and 60 rpm;
- the melting temperature is less than or equal to 290°C, preferably less than or equal to 285°C, more preferably it is about 282°C;
- the working pressure is comprised between 140 and 160 Bar, preferably between 145 and 155 Bar, more preferably it is about 152 Bar.
